Europäisches Patentamt

**European Patent Office**

**Office européen des brevets**

(11) Publication number: **0 045 533**
**A1**

(12) # EUROPEAN PATENT APPLICATION

(21) Application number: 81200574.2

(22) Date of filing: 27.05.81

(51) Int. Cl.³: **C 08 F 10/00**
**C 08 F 4/64, C 08 F 4/02**

(30) Priority: **10.06.80 IT 2267280**

(43) Date of publication of application:
**10.02.82 Bulletin 82/6**

(84) Designated Contracting States:
**AT BE CH DE FR GB LI NL SE**

(71) Applicant: ANIC S.p.A.
Via M. Stabile, 216
I-90139 Palermo(IT)

(72) Inventor: Greco, Alberto
Via Mughetti, 2
I-20077 Dresano Milano(IT)

(72) Inventor: Bertolini, Guglielmo
Via Parco Vecchio, 30/b
I-27100 Pavia(IT)

(72) Inventor: Cesca, Sebastiano
Via Pace, 7/c
I-20097 San Donato Milanese Milano(IT)

(74) Representative: Henke, Erwin et al,
Ing.Barzanò & Zanardo S.p.A. Via Borgonuovo, 10
I-20121 Milano(IT)

(54) Process for preparing catalytic system components for the high-yield polymerization of alpha-olefines, products obtained thereby and polymerization process exploiting them.

(57) For polymerizing alpha-olefins, and more particularly propylene, a catalytic system is disclosed, which contains, as its active components, magnesium chloride, an electron-donor, aluminium chloride and titanium chloride. Critical ratios are : $MgCl_2$ to titanium chloride more than 10, electron-donor to $MgCl_2$ lower than 0.5 and $AlCl_3$ to titanium chloride comprised between 0.8 and 1.5. Preferred electron-donors are the esters and especially suitable is an alkyl ester of benzoic acid. The catalytic system is completed by an organic metallic compound of aluminium.

EP 0 045 533 A1

CASE 1313

PROCESS FOR PREPARING CATALYTIC SYSTEM
COMPONENTS FOR THE HIGH-YIELD POLYMERIZATION OF ALPHA-
OLEFINES, PRODUCTS OBTAINED THEREBY AND POLYMERIZATION
PROCESS EXPLOITING THEM .

This invention relates to a process for the preparation of catalytic systems useful for the high-yield polymerization of alpha-olefines, particularly of propylene: it relates in addition to the products so obtained.

It is known that the catalysts for the preparation of polypropylene must contain in their composition a magnesium halide (generally $MgCl_2$) and electro-donors, which act as supports for the catalytically active element, which is titanium and is present as $TiCl_4$, and that such catalytic materials are used as components in Ziegler-type systems in which the aluminium-alkyl is, in its turn, associated with a fraction of the electro-donor.

Both the yield and the stereospecificity of the polypropylene produced with such particular catalytic systems are greatly influenced by the correct setting of the ratios $MgCl_2$ / Ti chloride/electron-donor in the solid catalytic component and aluminium alkyl/electron-donor in the soluble Ziegler component.

However, the method of preparation of the support for the solid catalytic component is by far the outstanding factor in determining the characteristics of the catalytic system, both under the respect of the activity and the stereospecificity in the polymerization of alpha-olefines.

Among the methods for the preparation of the solid catalytic material the concurrent dry grinding of the individual components is a process which is generally adopted, as disclosed in the German DE-OS Specifications 21 43 346 and 21 43 348. More recently, the literature refers to solid catalytic components obtained by synthesizing $MgCl_2$, generated in situ, or by halogenation of organic metallic species of the soluble magnesium, or also by Grignard disproportionation (Brit. Pat. 867 401, German DE-OS 29 04 103). Catalytic materials of the kind referred to above are generally characterized by specific surface areas which are higher than those obtained by mechanical concurrent grinding and consequently they, in combinations of the Ziegler type, generally display an improved catalytic efficiency in the polymerization of alpha-olefines.

The present Applicants have now found, and this is the subject matter of the present application, a process for the preparation of the solid component of catalytic systems usable for the high-yield polymerization of alpha-olefines, more particularly of propylene. The catalytic component so prepared, which is, in turn, another aspect of the present invention, is capable, in point of fact, of producing polypropylene with outstandingly high yields which are higher than those described in the conventional art, under conditions of even very moderate pressures, which can even be as low as 5 atm.

A basic feature of the solid components made according to this invention is that they contain, in addition to magnesium chloride, titanium chloride and the electron-donor, also $AlCl_3$, the latter being present in a ratio close to the stoichiometric ratio relative to titanium and must possess such a surrounding environment that the possibility of the formation of complexes between it and the electron-donor can definitely be excluded.

This compound is employed, as outlined above, as a component of a catalytic system in the polymerization of alpha-olefines, more particularly of propylene, and the system in question comprises, in addition to the solid component defined hereinabove, an organic metallic compound of aluminium and a variable proportion of an electron-donor.

The ratio of the Al of the co-catalyst to the Ti of the solid catalytic body must be higher than 10 and is preferably comprised between 50 and 100, whereas the proportion of the electron-donor relative to the co-catalyst must be such that the molar ratio ED./Al is lower than 1, ED standing for Electron Donor, and is preferably comprised between 0.01 and 0.5.

The Electron Donor(s) associated to the co-catalyst can be same as, or different from, that which takes part to the composition of the solid catalytic component.

Such an Electron Donor, preferably one of the non-chelating type, can be selected from among ethers, aldehydes, alcohols, phenols, esters, also of a heterocyclic or aromatic nature, amines, nitriles, amides, thioalcohols, tioethers, tioesters or derivatives of phosphorus, such as phosphoramides, phosphites, phosphates, or phosphines.

The composition of the solid catalytic component comprises, as specified hereinabove, $MgCl_2$, an electron donor, $AlCl_3$ and titanium chloride. The ratio of the magnesium chloride to the titanium chloride is higher than 10 and is preferably comprised between 15 and 30.

The Electron Donor, which is preferably an ester and above all an alkyl ester of the bezoic acid or a derivative of the latter acid, is introduced in the catalytic composition so as to exclude the formation of complexes of it with $AlCl_3$ and, in addition, it must be present in such an amount that the ratio Electron Donor/ $MgCl_2$ is below 0.5 and is preferably comprised between 0.1 and 0.25. As outlined above, the solid catalytic component must contain $AlCl_3$ so that the ratio $AlCl_3$/Ti chloride is equal to 1 or nearly 1, and the preferred value for this ratio is preferably comprised between 0.8 and 1.5 .

For the preparation of the solid catalytic component the instant process provides for a synthesis in two sequential steps : the first is the preparation of an insoluble metallic organic component which is compo-

sed by Al, Mg, an electron-donor , a halogen and a certain amount of Mg-alkyl or Al-alkyl groups and which will be called herein the solid metallic organic component (A). The second step provides for the formation in proper sense of the solid catalytic component which will be called (B) herein, as obtained by treating (A) with an excess of $TiCl_4$ and a polyhalogenated hydrocarbon and/or an inorganic halide also used in excess, at a temperature generally comprised between 20°C and 150°C and preferably between 60°C and 110°C.

The adoption of the polyhalogenated hydrocarbon and of the inorganic halide is vital to the end of achieving the formation of the compositions indicated for the solid catalytic component (B) and thus for the display of the maximum activity in polymerization, expressed in term of kg of polymer per g of Ti.

These activities, in fact, are at least 5 times a multiple of those which are obtained from catalytic materials which are prepared by omitting the treatment with the polyhalogenated organic or inorganic component.

For the preparation of the insoluble metallic organic component (A) two alternative approaches have been followed.

The first procedure comprises the reaction, in a hydrocarbonaceous solvent, between magnesium dialkyl and a metallic organic compound of aluminium, preferably $AlEt_2Cl$, partially complexed with an electron-donor, an ester of the type indicated above whenever possible, and, preferably, an alkyl benzoate or a derivative thereof.

The ratio Al/Mg must be 2 or slightly above 2 and the ratio Al/electron-donor must be 2 or higher and a ratio comprised between 3 and 5 is preferred.

The second procedure contemplates the use of magnesium atoms as produced by vaporization of metallic magnesium in hydrocarbonaceous solution containing a metallic organic compound of aluminium, preferably $AlEt_2Cl$ partially complexed with an electron-donor of the same kind as indicated hereinabove and an alkyl chloride, so that the ratio Al/electron-donor is preferably within the range which has been indicated and the ratio (Al+RCl) / $M_g$ is at least 2 or slightly thereabove.

Both procedures lead, as outlined above, to a product which contains Mg, Al, chlorine, electron-donor(s) and alkyl metal groups (Mg-alkyls, Al-alkyls): this product precipitates from the hydrocarbonaceous solutions and can be collected on a filter and purified by washing it with inert eluants to strip it from the excess of aluminium alkyl and electron-donor.

As a rule, it is not required that this insoluble metallic organic compound is dried so that it is reslurried in a hydrocarbon (petroleum is preferred) and kept ready in storage for the subsequent treatment with $TiCl_4$ and the polyhalogenated hydrocarbon.

The insoluble metallic organic component (A) exhibits a composition which is different from that of the

7.

solid catalytic component proper (B): more particularly it exhibits a lower Mg/Al ratio and a higher Mg/Ti ratio: these ratios, however, are adjusted in the subsequent treatment with $TiCl_4$ and the polyhalogenated hydrocarbon (or the inorganic halide) and brought to the ranges of the compositions indicated above for the solid catalytic component.

The treatment with the excess $TiCl_4$ and with the excess of the polyhalogenated hydrocarbon or the inorganic halide is carried out by reslurrying (A°)in such pure reagents or in a solution thereof in a hydrocarbonaceous solvent. Among the polyhalogenated hydrocarbons to be used to this purpose, there can be mentioned $CCl_4$, $CHCl_3$, $C_2Cl_6$, $CBrCl_3$, hexachlorocyclopentadiene, hexachloropropylene and others, and, among the inorganic ones, there can be mentioned $SnCl_4$, $SnCl_3R$, $SbCl_5$, $SiCl_4$, $POCl_3$ and others; $CCl_4$ or its derivatives are preferred.

A necessary condition is that $TiCl_4$ and the organic or the inorganic chlorinated compound are used in a broad excess over the weight of the insoluble metallic organic component (B); preferably from 10 to 1000 parts by weight. The ratio of the polyhalogenated hydrocarbon and/or the inorganic halide to $TiCl_4$ can be varied within a wide range, for example from 0.1 to 10, and preferably is confined between 0.5 and 2.

The treatment is carried out under hot conditions for a variable time: reaction times from half-hour to 3 hours and temperatures from 65°C to 110°C are advisable.

On completion of the treatment, the solid catalytic component (B) is filtered when still hot, washed with a hydrocarbonaceous liquid and dried in a stream of nitrogen free of oxygen, or under vacuum.

The polymerization of polypropylene or other alpha-olefines with the catalyst according to the present invention is carried out in conditions which are normally used for the Ziegler-type systems, in suspension, or in the gaseous phase or in a monomer in the liquid state at a temperature comprised between ambient temperature and 200°C and under pressures which may attain 150 atm.

The as-produced polymer has been tested without removing the heterotactic fraction: the intrinsic viscosity has been measured in Dl/g (decilitres per gram) units in decaline at 135°C, and the percentage crystallinity has been measured with X-ray irradiation on samples which had been annealed at 130°C for three hours.

A few examples will now be supplied, having the purpose of illustrating the invention without, however, limiting it.

EXAMPLE   1

Preparation of the solid catalytic component (B)
by the method which employs Mg (nor. $C_6H_{13})_2$.

A solution in nor. heptane (80 mls) of $AlEt_2Cl$ (20 mls, i.e. 160 millimols) was cooled between 0°C and +5°C and supplemented dropwise during 15-20 minutes, with stirring, with a solution in nor.heptane (20 mls) of ethylbenzoate (6 mls, i.e. 40 millimols).   The solution was reconditioned at room temperature (20°C) for 30 mins. and was maintained at such a temperature for 30 additional minutes with stirring. The solution was allowed to cool again at 0°C ($\pm$ 2°C) and supplemented dropwise with a 17% solution of Mg (nor.hexyl)$_2$ in hexane (80 mls., 70 millimols) with vigorous stirring during 20 mins.

A precipitate was formed, which was stirred for 20 additional minutes at 0°C, and two hours at room temperature thereafter.

The product was withdrawn from the solution by filtration on a sintered glass filter, washed with nor.heptane (5 times with 3 millimols each) and fluidizing it each time in nitrogen counterflow on the filter.

The product thus obtained, which was the solid catalytic component (A) was reslurried without drying it in nor.heptane (70 mls) and the slurry was phoned in a solution of TiCl$_4$ (50 mls) in CCl$_4$ (30 mls) which was vigorously stirred at room temperature. The slurry, while keeping a speedy stirring constant, was brought to 65°C during 30 mins. and maintained to said temperarure for one additional hour, whereafter it was brought to 110°C during 30 mins. and maintained at the latter temperature for 2 hours.

During this treatment, the colour of the slurry changed from the original white to brown and then to reddish violet. The slurry was filtered when still hot and the violet solid (solid catalytic component (B) ) was repeatedly washed with nor.heptane (6 times with 30 mls each) and finally dried in a vacuo (yield 80 g.).

From the filtered solution there crystallized colourless needles of $AlCl_3$ ethylbenzoate (0.85 g). The catalytic component (B) analyzed :

| | |
|---|---|
| Ti | 1.97%  by wt |
| Mg | 18.50% |
| Al | 1.41% |
| Cl | 60.56% |
| ethyl benzoate | 17.20% |

and corresponding to the composition :

$$Ti_1Al_{1.3}Mg_{18.5}Cl_{41.4} \text{ (ethylbenzoate)}_{2.8}$$

The specific surface area was 187 $m^2/g$ (square metres per gram).

Polymerization tests with the solid catalytic component (B).

A two-litre steel autoclave equipped with paddled stirrer (450 RPM) was purged at 120°C with oxygen-free nitrogen and then with polymerization-grade monomeric propylene and subsequently purified by causing it to flow through two 1-inch diameter, 150 cm-high columns, either of which was filled with 4 A molecular sieves and the other with a catalyst with reduced copper oxide. The autoclave was cooled to 60°C, evacuated and subsequently charged with a solution in nor.heptane (1,000 mls) of $AlEt_3$(1,2 ml = 9 millimols) and p.methoxyethylbenzoate (0.37 mls = 2.1 millimols) and solid catalytic component (B) (84 mg = 0.034 milligram-atom of Ti), then with hydrogen (200 mls) and finally with monomeric propylene (7 atm in total). The temperature rised rapidly to 65°C and was maintained during the entire test run (2½ hours), as well as the pressure, by continuous addition of monomer.

As the autoclave was discharged, polymer powder was collected, which was dried at 70°C. The yield was 285 g, that is, 3.39 kg per g of (B), the X-ray crystallinity was 55%, the apparent specific gravity was 0.25 kg/l (kilograms per litre) and $[\eta] = 2.1$.

The yield of polymer with respect to Ti was 175 kg/g.

Checking Example 1

Preparation of the solid catalytic component (B) from (A) but without any polychlorinated hydrocarbon (or inorganic chloride being present).

The solid catalytic component (A) was prepared under the same conditions as disclosed in EXAMPLE 1 and then reslurried in nor.heptane (70 mls) and siphoned into pure $TiCl_4$ (80 mls) stirred at room temperature. Under a speedy stirring the temperature was raised to 65°C during 30 mins., maintained at 65°C for one hour, and lastly raised to 110°C during 30 minutes, whereafter the latter temperature was maintained for one additional hour. The solid catalytic component thus obtained had, when analyzed, the following percentage composition :

| | |
|---|---|
| Ti | 9.1 |
| Mg | 16.5 |
| Al | 2.0 |

Cl                      65.0

Ethyl benzoate          7.4

corresponding to the composition :

$Ti_1Mg_{3.58}Al_{0.39}Cl_{9.64}(ethylbenzoate)_{0.26}$

The specific surface area was      341 $m^2/g$

Polymerization tests (checking Example 1)

In the same autoclave and with the same procedure as described for EXAMPLE 1 hereof for polymerization, there were introduced nor.heptane (1,000 mls), $AlEt_3$ (8 millimols), p.methoxyethylbenzoate (0.37 ml = 21 millimols) and the solid catalytic component prepared in the control test of EXAMPLE 1 hereof (146 mg = 0.277 milligram-atom of Ti) and hydrogen (200 mls).

Polymerization was carried out under the same conditions as described for EXAMPLE 1 hereof, and on completion of the test there were recovered 190 g of powdered polypropylene.

The yield of polymer per g of solid catalytic component was 1.3, the cristallinity (X-ray) 54%, the apparent density was 0.27 and $\lceil \eta \rceil$ = 2.0. The yield of polymer relative to Ti was 14.3 kg/g.

EXAMPLES  2  TO  15  INCLUSIVE.

In this set of Examples different esters have been incorporated into the solid catalytic component (B) by treating the insoluble metallic organic compound (A) with the same preparation of $TiCl_4$-$CCl_4$ as employed in EXAMPLE 1, at 90°C for 2 hrs.

13.

| TEST N° | ESTER TYPE (E) | COMPOSITION OF THE SOLID CATALYTIC COMPONENT (B) |
|---|---|---|
| 2 | ethyl benzoate | $Ti_1Mg_{16.7}Al_{0.95}Cl_{37.4}E_{2.8}$ |
| 3 | isopropyl benzoate | $Ti_1Mg_{18.3}Al_{1.1}Cl_{42.8}E_{2.9}$ |
| 4 | isoamyl benzoate | $Ti_1Mg_{17.9}Al_{1.0}Cl_{41.7}E_{2.0}$ |
| 5 | p.methoxyethyl benzoate | $Ti_1Mg_{20.6}Al_{1.4}Cl_{47.0}E_{4.5}$ |
| 6 | 2-thenoyl ethylate | $Ti_1Mg_{16.0}Al_{0.81}Cl_{33.1}E_{5.9}$ |
| 7 | p.biphenoxyphosphoryl isoamyl benzoate | $Ti_1Mg_{17.3}Al_{0.95}Cl_{40.1}E_{5.3}$ |
| 8 | p.biphenoxyphosphoryl isoamyl benzoate | $Ti_1Mg_{18.4}Al_{1.1}Cl_{43.1}E_{4.9}$ |

The polymerization tests relative to these materials have been carried out by introducing in the 2-litre autoclave, thermostatically controlled at 65°C, nor..heptane (100 mls), $AlEt_3$ (9 millimols), hydrogen (200 mls) and 8.5 atm of propylene, p.methoxybenzoate (2.1 millimol) and the solid catalytic component (B) slurried in heptane (50 mls). After a 4-hour polymerization run, during which the pressure of propylene has been kept constant by a continuous introduction of monomer, the following results have been obtained :

| EXAMPLE N° | REF. N° of ESTER | QUANTITY OF ESTER | | POLYMER YIELD | KG OF POLYMER PER g of (B) | CRISTAL-LINITY | [η] |
| | | mg | millimols | g | kg/g | (X-RAY) % | dl/g |
|---|---|---|---|---|---|---|---|
| 9 | (2) | 80 | 2.1 | 410 | 5.12 | 55 | 2.0 |
| 10 | (3) | 92 | 2.1 | 450 | 4.89 | 55 | 1.9 |
| 11 | (4) | 105 | 2.1 | 440 | 4.19 | 54 | 2.3 |
| 12 | (5) | 170 | 1.5 | 300 | 1.76 | 52 | 2.1 |
| 13 | (6) | 134 | 1.4 | 190 | 1.41 | 52 | 2.2 |
| 14 | (7) | 130 | 1.8 | 250 | 1.92 | 54 | 2.2 |
| 15 | (8) | 149 | 1.3 | 300 | 2.01 | 51 | 1.8 |

14.

EXAMPLES FROM 16 TO 23 INCLUSIVE . -

In the Examples to follow the solid catalytic component (B) has been prepared by treating the solid catalytic component (A) obtained according to Example 1, that is to say, by utilizing ethylbenzoic ester and the same conditions and quantities as indicated in that Example, with the following chlorinated compounds, used with the same molar ratio relative to $TiCl_4$ and in the same proportion as used in Example 1. The temperatures and the durations of the treatments are the same as in Examples 2 to 8.

| TEST N° | TYPE OF POLY-CHLORINATED CPD. | MOLAR COMPOSITION OF THE SOLID CATALYTIC COMPOUND(B) |
|---|---|---|
| 16 | $CBrCl_3$ | $Ti_1Mg_{18.2}Al_{1.0}Cl_{42.0}E_{2.6}$ |
| 17 | $C_2Cl_6$ | $Ti_1Mg_{17.1}Al_{0.89}Cl_{39.1}E_{2.7}$ |
| 18 | $SnCl_4$ | $Ti_1Mg_{19.5}Al_{1.2}Sn_{0.15}Cl_{46.1}E_{3.0}$ |
| 19 | $SnCl_3$(nor.butyl) | $Ti_1Mg_{18.6}Al_{1.1}Sn_{0.05}Cl_{42.9}E_{2.9}$ |

Polymerization tests carried out with the solid catalytic components synthesized in the tests from 16 to 19.

These solid catalytic components have been used in polymerization tests carried out according to the indications followed in the Examples from 9 to 15 inclusive and have given the following results :

| (B) | Quantity of (B) mg | Yield of Polymer g | kg of Polymer per g of (B) kg/g | Crystallinity (X-ray) % | [η] dl/g |
|---|---|---|---|---|---|
| 20(16) | 90 | 320 | 3.55 | 53 | 1.9 |

| 21(17) | 82 | 470 | 5.73 | 53 | 1.8 |
| 22(18) | 87 | 205 | 2.35 | 51 | 2.2 |
| 23(19) | 83 | 260 | 3.13 | 52 | 2.3 |

EXAMPLE 24

Preparation of the solid catalytic component (B) by the procedure providing for the vaporization of magnesium (exclusion of the use of Mg (nor.hexyl)$_2$ or of MgR$_2$ (magnesium alkyl).

Ethyl benzoate (5 mls = 35 millimols) is added to a solution of AlEt$_2$Cl (15 mls = 118 millimols) in nor.heptane (200 mls) at -78°C. The cold solution is supplemented with nor.hexyl chloride (13.95 millimols) and in the solution there is evaporated during 30 mins. approx. metallic Mg under vacuum at -70°C (2.10 g = 85 milligram atoms). On completion of the vaporization (about 30 mins) the slurry is reconditioned at room temperature (24°C) and is so maintained in an inert atmosphere with stirring for a number of hours (about 8 hrs) whereafter the slurry is filtered, repeatedly washed with nor.heptane and reslurried, when still moistened with nor. heptane, in a solution of TiCl$_4$ (50 mls) and CCl$_4$ (30 mls) in nor.heptane (50 mls).

The slurry is kept vigorously stirred for two hours at 90°C and finally it is washed with heptane and dried in a vacuo.

The percentage analytical composition of the slurry was:

| Ti           | 1.45  |
| ------------ | ----- |
| Al           | 0.85  |
| Mg           | 20.50 |
| Cl           | 67.35 |
| Ethylbenzoate | 9.8  |

which corresponded to the composition :

$$Ti_1Mg_{27.8}Al_{1.0}Cl_{62.6}Ethylbenzoate_{2.2}$$

Superficial area (specific)    381 $m^2/g$

This product (78 mg) was employed in a polymerization run for propylene according to the procedure described in Example 1.    There were obtained 2.74 g of polypropylene having an X-ray crystallinity of 52%, the yield in kg of polymer per g of solid component (B) was 3.5, $[\eta] = 2.4$ and the apparent density was 0.32.    The yield referred to the catalytic element was 242 kg of polymer per g of Ti.

EXAMPLES FROM 25 TO 28 INCLUSIVE . -

The same procedure as in Example 24 hereof is adopted, but by employing a double quantity of ester (70 millimols) in the synthesis of the corresponding solid catalytic componenent has given the following catalytic materials :

| TEST N° | TYPE OF ESTER (E) | COMPOSITION OF THE SOLID CATA-LYTIC COMPONENT |
| ------- | ----------------- | --------------------------------------------- |
| 25      | Ethyl benzoate    | $Ti_1Mg_{25.3}AI_{0.98}Cl_{56.0}E_{4.7}$      |
| 26      | Isoamyl benzoate  | $Ti_1Mg_{23.8}Al_{0.95}Cl_{53.7}E_{4.2}$      |

These products, employed in a polymerization run for propylene, under the same conditions as adopted for Examples 9 to 15, but under a pressure of 5 atm (total pressure) have given the following results:

| TEST N° | REF. ESTER | QUANTITY OF PRODUCT mg | ESTER millimol | YIELD OF POLYMER g | kg OF POLY- MER PER g(B) kg/g(B) | CRYSTALL. (X-ray) % | [η] dl/g |
|---------|-----------|------------------------|----------------|--------------------|--------------------------------|---------------------|----------|
| 27 | (25) | 90 | 2.1 | 298 | 3.31 | 54 | 2.0 |
| 28 | (26) | 106 | 2.1 | 400 | 4.05 | 55 | 1.98 |

## C L A I M S :

1.    A solid composition usable as component of a catalytic system adapted to the high-yield polymerization of alpha olefins, comprising $MgCl_2$, $AlCl_3$, an electron-donor and titanium chloride in which the several constituents are present in the following ratios :

Magnesium chloride : Titanium chloride  higher than 10 Electron-donor     : Magnesium chloride lower than 0.5 Aluminium chloride : Titanium chloride  comprised between 0.8 and 1.5.

2.    Solid composition according to Claim 1, wherein the electron-donor is a member selected from among the esters.

3.    Solid composition according to Claim 2, wherein the electron-donor is preferably consisting of an alkyl ester of the benzoic acid.

4.    A method for the preparation of the solid composition as claimed in any of Claims 1 to 3 consisting in a preliminary preparation of an insoluble organic metallic compound containing Al, Mg, electron-donor, halogens and Mg-alkyl or Al-alkyl groups and in the subsequent treatment of what has been thereby obtained with an excess of $TiCl_4$ in the presence of a halogenated compound selected from among the polyhalogenated hydrocarbons and the inorganic halides.

5.    A method for the preparation of the composition claimed in any of the Claims 1 to 3, according to Claim 4, characterized in that the preliminarily prepared

2.

organic metallic compound is obtained by reacting magnesium dialkyl with an organic metallic compound of aluminium which has partially been complexed with an electron-donor.

6. A method according to Claim 4, characterized in that the preliminarily prepared organic metallic is prepared by vaporization of metallic magnesium in a hydrocarbonaceous solution containing an organic metallic derivative of aluminium which has partially been complexed with an electron-donor and an alkyl chloride.

7. A method according to Claim 4, characterized in that the reaction between the organic metallic compound obtained according to any of Claims 5 or 6 with an excess of $TiCl_4$ and a halogen compound is carried out at a temperature comprised between 20°C and 150°C.

8. A process for the high-yield polymerization of alpha-olefins consisting in contacting the alpha-olefin with a catalytic system consisting of :

- a solid composition comprising $MgCl_2$, $AlCl_3$, an electron-donor and titanium tetrachloride wherein the constituents are present in the following ratios :

  $MgCl_2$ : Titanium chloride higher than 10; electron-donor : $MgCl_2$ lower than 0.5 ; $AlCl_3$ : Titanium chloride between 0.8 and 1.5 ;

- an organic metallic compound of Aluminium, and
- an electron-donor.

9. A process for the high-yield polymerization of alpha-olefins according to Claim 8, characterized in that the reaction is carried out in the presence of a catalytic system in which the electron-donor is selected from among ethers, aldehydes, alcohols, phenols, esters also of heterocyclic or aromatic derivatives, amines, nitriles, amides, thioalcohols, thioethers, thioesters, phosphoramides, phosphites, phosphates, phosphines.

10. A process for the high-yield polymerization of alpha-olefins according to Claims 8 and 9 characterized in that the reaction is carried out in the presence of the catalytic system in which the ratio of the aluminium of the organic metallic compound to the titanium is equal to or higher than 10.

11. A process for the high-yield polymerization of alpha-olefins according to Claim 10 characterized in that the reaction is carried out in the presence of a catalytic system in which the ratio of aluminium to titanium is preferably between 50 and 100.

12. A process for the high-yield polymerization of alpha-olefins according to Claims 8 and 9 characterized in that the reaction is carried out in the presence of a catalytic system in which the ratio of the electron-donor to the aluminium of the organic metallic compound is lower than 1.

13. A process for the high-yield polymerization of alpha-olefins according to Claim 12, characterized in that the reaction is carried out in the presence of a catalytic system in which the ratio of the electron-donor to aluminium is comprised between 0.01 and 0.5.

14.    A process for the high-yield polymerization of alpha-olefins according to one or more of the preceding Claims, characterized in that the reaction is carried out at a temperature comprised between ambient temperature and 200°C.

15.    A process for the high-yield polymerization of alpha-olefins according to one or more of the preceding Claims, characterized in that the reaction is carried out under a pressure variable up to 150 atmospheres.

16.    A process for the high-yield polymerization of alpha-olefins according to one or more of the preceding Claims, characterized in that the alpha-olefin fed into the reaction is propylene.

**EUROPEAN SEARCH REPORT**

## European Patent Office

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| EP | EP - A - 0 019 312 (SHELL)<br>* Claims 1-10; page 3, lines 3,4, 19-23; page 4, lines 21-26; page 5, lines 7-34; page 6, lines 5-26; page 7, lines 25-31 *<br>-- | 1-5, 7-16 | C 08 F   10/00<br>4/64<br>4/02 |
| A | EP - A - 0 004 790 (TOA NENRYO KOGYO)<br>* Claims 1-5, 9-10 *<br>-- | 1 | |
| A | FR - A - 2 326 429 (NIPPON OIL)<br>* Claims 1,2,5; page 2, line 15 - page 3, line 37; page 5, lines 24-37 *<br>----- | 1 | TECHNICAL FIELDS SEARCHED (Int. Cl.³)<br>C 08 F   10/00-<br>10/14<br>110/00-<br>110/14<br>210/00-<br>210/16<br>4/02 |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 22-09-1981 | WEBER |

EPO Form 1503.1   06.78